# EUROPEAN PATENT APPLICATION

(11) **EP 1 698 526 A1**
(43) Date of publication of application: **06.09.2006**
(21) Application number: 06002049.2
(22) Date of filing: 01.02.2006
(51) Int. Cl.: B60R 21/34

(54) **Airbag and airbag device**

(30) Priority: 01.03.2005 JP 2005056077
(71) Applicant: TAKATA CORPORATION, Minato-ku, Tokyo 106-8510 (JP)
(72) Inventor: Nakamura, Atsushi, Tokyo 106-8510 (JP)
(74) Representative: Vossius & Partner

(57) **Abstract**

The airbag 10 includes one first bag 1 disposed on an object side, and two second bags 2 disposed on a person side. One end of a duct 51 is sewn to the first bag 1. The other end of the duct 51 surrounds an inflator 52. The first bag 1 deploys toward an automobile 50, and the second bags 2 deploy toward the person. The bags 1 and 2 communicate with each other through communicating openings 20. This airbag can inflate to ensure a sufficient distance between a person and an object in an inflated state without using a high-output inflator, and an airbag device using the airbag (Fig. 5).

## Description

The present invention relates to an airbag that protects a person in a collision of the person with an object such as an automobile, and more particularly, to an airbag in which a plurality of bags are arranged in a colliding direction in order to ensure a sufficient thickness in an inflated state. The present invention also relates to an airbag device having the airbag.

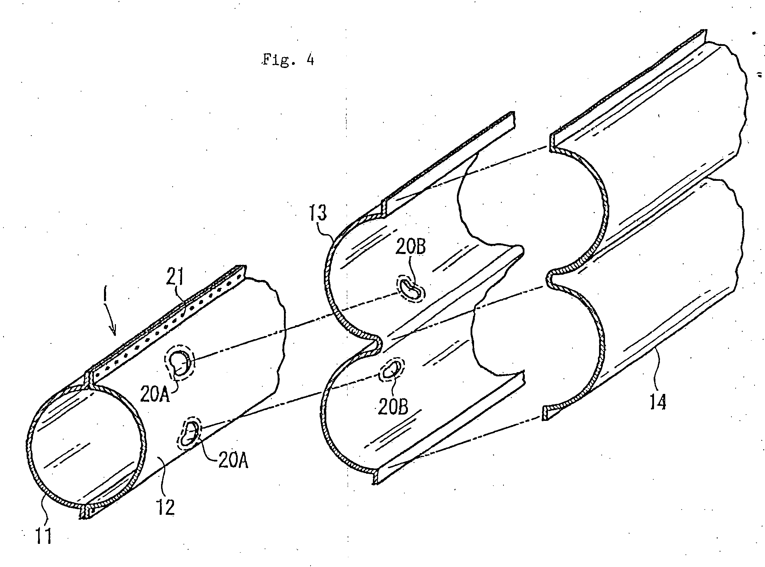

JP-A-2001-334895 (Patent Document 1) discloses a pedestrian protection airbag as an airbag including a plurality of bags arranged in a colliding direction. Fig. 4 of the publication illustrates an airbag in which a small inner bag is disposed on a lower inner side of an outer bag that vertically and widely inflates along the front face of an automobile. Since the inner bag has a small capacity, it inflates earlier than the outer bag to receive the lower thigh of a pedestrian.

In the above airbag disclosed in JP-A-2001-334895, the outer bag has a large capacity, and therefore, a high-output inflator is necessary to inflate the outer bag early.

It is an object of the present invention to provide an airbag that can inflate to ensure a sufficient thickness between a person and an object in an inflated state without using a high-output inflator, and an airbag device using the airbag.

An airbag claimed in claim 1 protects a person by inflating between the person and an object in a collision therebetween, and includes a plurality of bags arranged in a colliding direction. The bags include a first bag disposed on an object side, and a second bag disposed on the outer side of the first bag and adjacently to a person side of the first bag.

In the airbag claimed in claim 2, according to claim 1, the second bag includes a plurality of second bags, the second bags are adjacently arranged in a direction orthogonal to the colliding direction, and the first bag is disposed between and on the object side of the second bags.

In the airbag claimed in claim 3, according to claim 2, a third bag is disposed between and on the person side of the second bags.

In the airbag claimed in claim 4, according to any one of claims 1 to 3, the bag on the object side communicates with the adjacent bag on the person side through a communicating opening.

An airbag device claimed in claim 5 includes the airbag according to any one of claims 1 to 4, and an inflator for inflating the airbag.

In the airbag and the airbag device of the present invention, the second bag is disposed adjacently to the person side of the first bag disposed on the object side. The second bag is disposed on the outer side of the first bag, and has a capacity smaller than the outer bag that encloses the inner bag, as in JP-A-2001-334895. Therefore, the entire airbag can be inflated early even by a low-output inflator.

In the airbag claimed in claim 2, since a plurality of second bags are arranged in a direction orthogonal to the colliding direction, a large width of the airbag can be ensured in the direction orthogonal to the colliding direction. Moreover, since a plurality of second bags are arranged in the orthogonal direction, and a space is provided therebetween, the airbag has a capacity smaller than in a case in which an airbag made of one bag extends wide in the orthogonal direction.

Since the first bag is disposed between and on the object side of the second bags, a sufficient thickness of the airbag in the colliding direction can be also ensured between the second bags.

In the airbag claimed in claim 3, the third bag is disposed on the person side of the second bags, and this can further increase the thickness of the airbag in the colliding direction. In this case, since a space is provided between the bags, the airbag has a capacity smaller than that of an airbag made of one bag.

According to the airbag claimed in claim 4, the inflator is disposed on the object side, and the bags can be inflated by gas from the inflator.

An embodiment will be described below with reference to the drawings.
Fig. 1 is a perspective view of an airbag according to an embodiment;
Fig. 2 is a cross-sectional view, taken along line II-II in Fig. 1;
Fig. 3 is a schematic sectional view showing a non-inflation state of the same airbag section as that in Fig. 2 in order to explain sewing of the airbag;
Fig. 4 is an exploded perspective view of the airbag;
Fig. 5(a) is a perspective view of the front of an automobile having the airbag, and Fig. 5(b) is a cross-sectional view, taken along line B-B in Fig. 5(a);
Fig. 6 includes perspective views of airbags according to other embodiments; and
Fig. 7 is a side view showing the interior of an automobile having a curtain airbag.

An airbag 10 includes one first bag 1 on an object side, and two second bags 2 on a person side. The bags 1 and 2 are inflated into a cylindrical shape. The first bag 1 is disposed between and on the object side of the inflated bags 2 and 2.

The airbag 10 is formed by sewing first to fourth panels from 11 to 14 made of, for example, cloth.

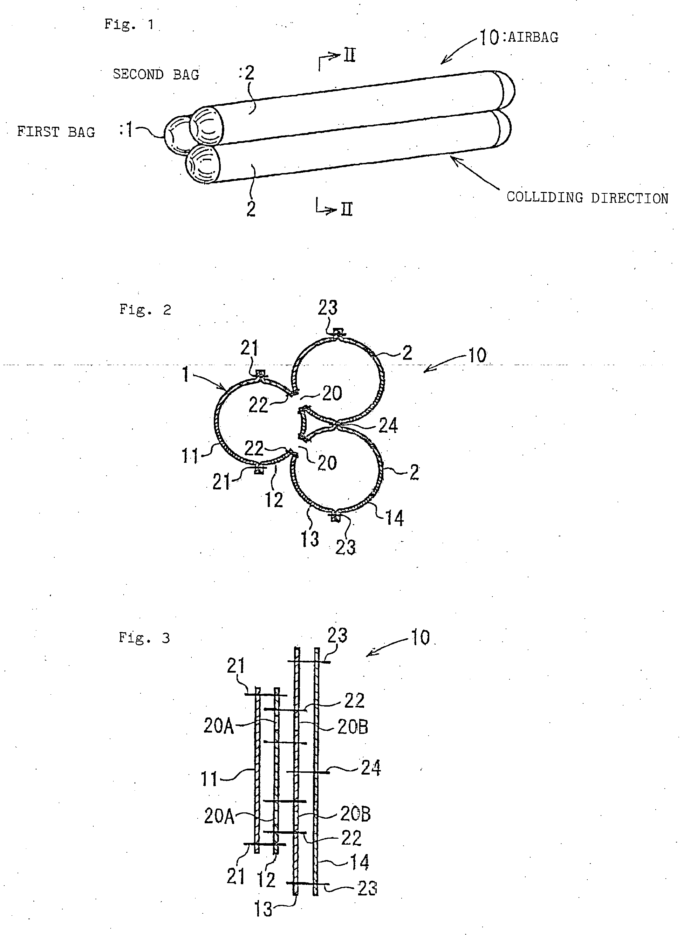

As clearly shown in Figs. 3 and 4, the first panel 11 on the object side and the second panel 12 on the person side are substantially rectangular, have the same size, and are sewn by seams 21 along their entire lengths. The first bag 1 is formed by sewing the panels 11 and 12 at the seams 21 along their entire lengths.

The third panel 13 is disposed on the person side of the second panel 12, and the fourth panel 14 is disposed on the person side of the third panel 13. These panels 13 and 14 are substantially rectangular, have the same size, and are sewn by seams 23 along their entire lengths. The panels 13 and 14 are also sewn at the center by a seam 24 extending in the longitudinal direction, and the two second bags 2 are formed thereby.

Apertures 20A and 20B are provided in overlapping portions between the second and third panels 12 and 13, and portions around the rims of the apertures 20A and 20B are sewn by seams 22. The bags 1 and 2 are connected thereby. Communicating openings 20 (Fig. 2) that connect the interiors of the bags 1 and 2 are formed by aligning the apertures 20A and 20B.

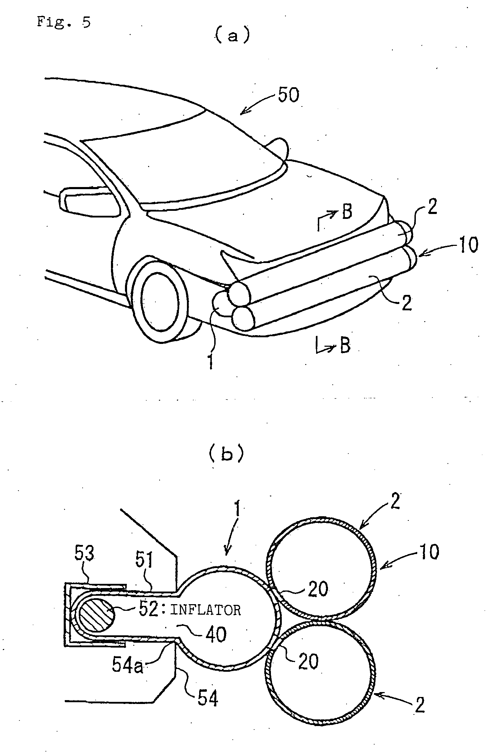

As shown in Fig. 5(b), a gas inlet 40 is provided on the object side (the side of an automobile 50) of the first bag 1, and a cylindrical duct 51 extends from the gas inlet 40. The other end of the duct 51 surrounds an inflator 52. The duct 51 may be provided integrally with the first bag 1, or may be separately provided and be sewn to the first bag 1.

The airbag 10 is folded and stowed in a case 53, and the case 53 is disposed at the front of the automobile 50. A bumper 54 of the automobile has an opening 54a that permits the inflated and deployed airbag 10 to pass therethrough. The opening 54a is closed by a tearable lid (not shown).

When a collision between the automobile 50 and a person is predicted, the inflator 52 is activated, and the airbag 10 inflates along the forefront face of the automobile 50. As shown in Fig. 5, the first bag 1 deploys on the side of the automobile 50, and the second bags 2 deploy on the person side. The inflated bag 10 receives the person, thereby absorbing an impact made on the person by the collision.

Since the two second bags 2 ad 2 are arranged in the vertical direction crossing over to the direction of collision with the person in the air bag 10, the vertical width of the airbag 10 in the vertical direction is sufficiently large. Moreover, since the first bag 1 is disposed between the second bags 2 and the automobile 50, a sufficient thickness is also ensured in the colliding direction. In addition, since the bags 1 and 2 are made of separate cylinders, and a space is provided therebetween, the capacity is smaller than that of a single airbag having a size such as to enclose the bags 1 and 2. Therefore, the airbag 10 inflates sufficiently early even when the inflator 52 has a small volume.

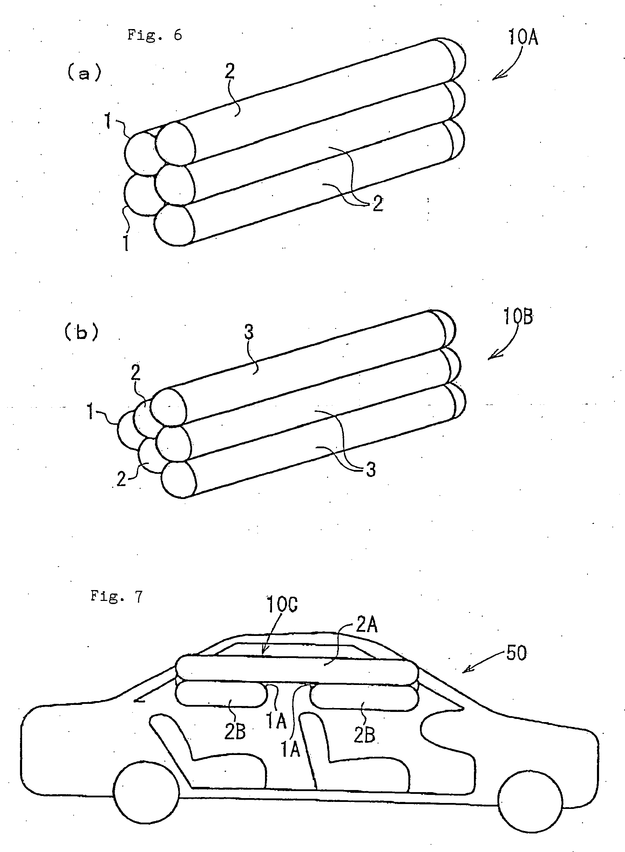

While the above airbag 10 includes one bag 1 and two bags 2 and 2, it may include two bags 1 and three bags 2 as in an airbag 10A shown in Fig. 6(a), or may include more bags 1 and 2. Third bags 3 may be provided on the person side of second bags 2, as in an airbag 10B shown in Fig. 6(b). The number of the third bags 3 is three, and a center one of the third bags 3 is disposed between and on the person side of the second bags 2 and 2. Although not shown, fourth bags may be disposed on the person side of the third bags 3.

While the longitudinal lengths of the bags 1, 2, and 3 are substantially equal in the airbags 10, 10A, and 10B, they may be different.

An airbag 10C shown in Fig. 7 is a curtain airbag that inflates along a side face of a cabin of an automobile 50. In the airbag 10C, second bags 2A and 2B are disposed on the person side (inner side) of first bags 1A disposed on the vehicle-body side. The bag 2A is disposed on the upper sides of the bags 2B, and extends from an A-pillar to the adjacency of a C-pillar. The number of the bags 2B is two, and the bags 2B are disposed beside a front seat and a rear seat, respectively.

Although not shown, the airbag of the present invention is also applicable to, for example, a passenger airbag, a rear-seat airbag, and a leg-protection knee airbag.

## Claims

1. An airbag for protecting a person by inflating between the person and an object in a collision therebetween, the airbag comprising a plurality of bags arranged in a colliding direction,
wherein the plurality of bags include a first bag disposed on an object side; and a second bag disposed on an outer side of the first bag and adjacently to a person side of the first bag.

2. The airbag according to claim 1, wherein the second bag includes a plurality of second bags, the second bags are adjacently arranged in a direction orthogonal to the colliding direction, and the first bag is disposed between and on the object side of the second bags.

3. The airbag according to claim 2, wherein a third bag is disposed between and on the person side of the second bags.

4. The airbag according to any one of claims 1 to 3,
wherein the bag on the object side communicates with the adjacent bag on the person side through a communicating opening.

5. An airbag device comprising:
the airbag according to any one of claims 1 to 4; and
an inflator for inflating the airbag.
